# EUROPEAN PATENT APPLICATION

(11) **EP 1 069 083 A1**
(43) Date of publication of application: **17.01.2001**
(21) Application number: 00112664.8
(22) Date of filing: 15.06.2000
(51) Int. Cl.: C03B 19/14

(54) **Process and apparatus for depositing silica glass on a planar substrate using a plasma torch**

(30) Priority: 05.07.1999 IT TO990578
(71) Applicant: Agilent Technologies, Inc., a corporation of the State of Delaware, Palo Alto, CA 94303-0870 (US)
(72) Inventor: Panciatichi, Cristina (IT), 10100 Torino (IT)
(74) Representative: Bosotti, Luciano

(57) **Abstract**

Disclosed is a process and apparatus for forming layers of vitreous silica, pure or doped, on a plate of silica uses an inductively coupled plasma torch (1) as the heat source, and comprises means (7,8,13-15) for supplying the torch (1) with the gases to be used for creating the plasma, sources (19,20) of reagents in the vapour state for forming the materials to be deposited, and means for imparting to the plate a reciprocating movement in a direction perpendicular to the axis of the torch (1). The sources (19,20) of reagents enable the reagents to be introduced into the tail of the plasma, in a free atmosphere, and supply reagents in the vapour state. The means (7,8,13-15) for supplying the torch (1) with the gases to be used for creating the plasma supply these gases at a pressure substantially equal to atmospheric pressure (isothermal plasma).

## Description

The present invention relates to the fabrication of components for optical telecommunications networks, and more particularly to a process and equipment for the deposition, by means of an inductively coupled plasma torch, of flat layers of vitreous silica intended for the realisation of integrated optical guides.

A technique commonly used for depositing planar layers of silica, which may be pure or doped with oxides, particularly germanium oxide, and are intended for the realisation of integrated optical guides, is what is known as flame hydrolysis deposition (commonly denoted by the abbreviation FHD), described, in particular, in the article "Silica waveguides on silicon and their application to integrated-optic components", Optical and Quantum Electronics, no. 22 (1990), pp. 391-416.

According to this technique, a layer of silica powder intended to form the layer beneath the actual guide (known as the buffer or undercladding) and a layer of silica doped with TiO₂ or GeO₂ intended to form the core of the guide are deposited on a plate of silicon or silica, the heat source used being a torch in which the flame is supplied with H₂ and O₂. After the deposition, the powder must be dehydrated and vitrified. The use of this technique gives rise to problems related to the supply of H₂ and O₂ required to generate the flame, since hydroxyl groups may easily be left within the deposited layers, causing an increase in the attenuation of the final integrated optical device; it is therefore necessary to provide a stage of dehydration of the powder, making the operation long and therefore expensive.

In many fields, including the fabrication of optical fibres, the use of heat sources consisting of plasma torches, in which gases such as argon, oxygen, nitrogen or air or mixtures thereof are brought to the plasma state, is also known. The use of plasma torches has also been proposed both for spinning the fibre and for the deposition of the layers of silica during the fabrication of the preform. This latter application is described, for example, in EP-A 693865, EP-A 727392 and in the paper "Modelling, Project and Numerical Simulation of an Inductively Coupled Plasma Torch for the Deposition of High Purity SiO₂" presented by G. Cocito and others to the GEC 1995 Meeting of the American Physical Society. Plasma torches provide uniform heating and, because of the gases used, do not give rise to hydroxyl groups.

EP-A 693865 and the paper by G. Cocito and others also describe the use, for the fabrication of preforms, of inductively coupled plasma torches, which, by comparison with torches using capacitors to create the electrical field required for the plasma generation, have the advantage of not requiring electrodes which may be corroded by the plasma, giving rise to metallic impurities within the deposited layers. The two documents are essentially concerned with the structure of the torch and do not provide any information about the deposition equipment in which the torch is used. In any case, the teachings relating to the fabrication of a preform, which has a cylindrical structure, are not applicable directly, or with modifications which are obvious to those skilled in the art, to the fabrication of flat layers.

The object of the present invention is to provide a process and equipment for the deposition of layers of silica, either pure or doped with a suitable dopant, on a flat target.

More particularly, the process according to the invention for forming layers of vitreous silica, pure or doped, on a target to which a reciprocating movement is imparted in a direction perpendicular to the axis of the torch comprises the use, as the heat source, of an inductively coupled plasma torch, and is characterized in that reagents in the vapour state are injected in a free atmosphere into the tail of a plasma produced by gases at a pressure substantially equal to atmospheric pressure.

The equipment for implementing the process comprises an inductively coupled plasma torch as the heat source, means for supplying the torch with the gases to be used for creating the plasma, sources of reagents for forming the materials to be deposited, and means for imparting to the target a reciprocating movement in a direction perpendicular to the axis of the torch, and is characterized in that the sources of the reagents for forming the materials of the deposited layers are connected to a nozzle arranged in such a way as to introduce the said reagents into the tail of the plasma, in a free atmosphere, and supply reagents in the vapour state to this nozzle, and the means for supplying the torch with the gases to be used for creating the plasma are capable of supplying these gases at a pressure substantially equal to atmospheric pressure.

For further clarification, reference should be made to the attached drawings, in which:
- Fig. 1 is a schematic representation of the equipment which implements the process;
- Figs. 2 - 4 are diagrams showing the relative positions of the torch and the plate on which the layers are deposited, and
- Fig. 5 is a diagram of the connections of the sources of the plasma supply gases and the reaction gases.

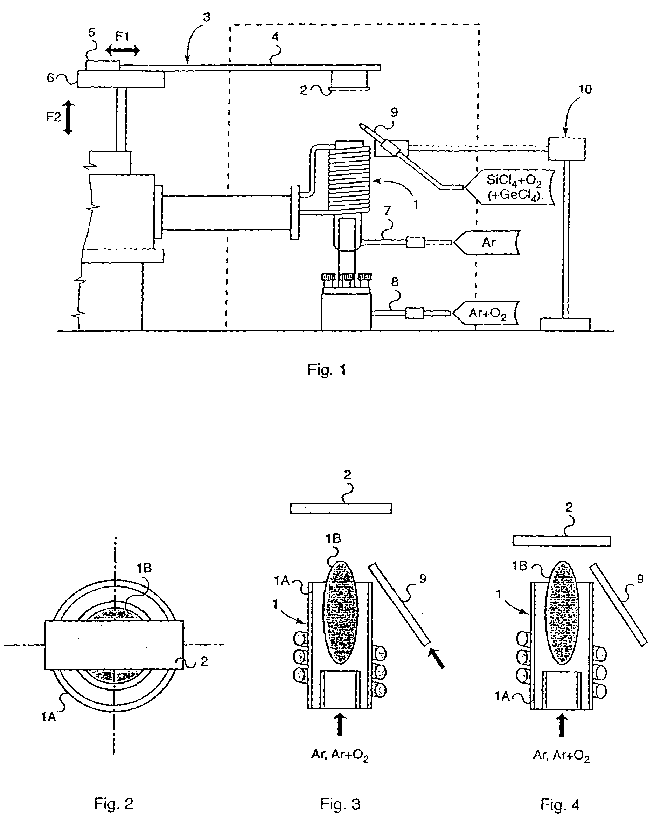

With reference to Fig. 1, the number 1 indicates the plasma torch which acts as a heat source for the deposition of layers of silica glass, pure or doped with germanium oxide, from reagents in the vapour phase. The torch 1 is an inductively coupled torch in which the discharge takes place in gases (typically Ar and/or O₂) which are injected at pressures close to atmospheric pressure. The outlet of the torch is located in a free atmosphere. The characteristics of a torch of this type are described in the document by G. Cocito and others cited above.

The substrate consists of a flat plate 2, of pure silica for example, carried by a support system 3 which is such that the plate 2 is positioned above the torch 1 and is centred with respect to the axis of the torch (see also Fig. 2, where the confinement tube is indicated by 1A and the plasma by 1B). The support advantageously comprises a glass arm 4 connected to a micrometric slide 5 which allows it to travel with a reciprocating movement with respect to the torch 1, as indicated by the arrow F1. Several passes of the support over the torch 1 may be required for the deposition and vitrification. Advantageously, the slide control system is such that it allows movements at different speeds according to the stage of the operation: in particular, the speeds which have been found suitable are such that a complete pass takes place in a period which may vary from approximately one minute to several minutes. The arm 4 and the slide 5 are mounted on a turret 6 which can be moved vertically, as indicated by the arrow F2, in such a way that the plate 2 can be positioned at different distances from the torch 1 during the deposition stage and during the vitrification stage; in particular, during the latter stage, the plate 2 can be brought closer to the torch 1, as shown by a comparison between Figures 3 (relating to the deposition stage) and 4 (vitrification stage) .

For the supply of the process gases, a first pipe 7 carries argon for confinement to the torch, while a second pipe 8 carries Ar and/or O₂ required for the formation of the plasma. The flow rates of Ar and O₂ are controllable individually, in such a way that it is possible to use as plasma gases a mixture of these two gases in any proportion, from pure argon, during the torch ignition stage, to pure oxygen which is used during the deposition.

The reagents (typically SiCl₄ and GeCl₄, assuming a possible doping with Ge, and O₂) are supplied in the vapour phase through a line 23 to the interior of a transport flow of O₂, and are introduced into the plasma by means of a nozzle 9 positioned in such a way that the flow of vapours arrives at the tail of the plasma: the nozzle 9 is positioned immediately upline of the torch 1, with reference to the direction of movement of the plate, and is carried by a support indicated as a whole by 10, which enables its position and its orientation with respect to the outlet of the torch 1 to be adjusted.

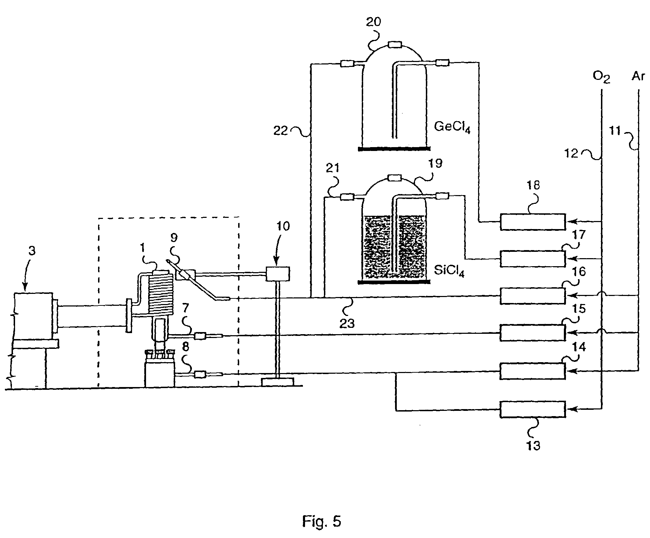

Figure 5 shows the gas supply system in greater detail. Ar and O₂ are carried, through respective lines 11, 12, to the mass flowmeters 13-18 for the individual monitoring of the flows of Ar and O₂ for the torch 1 (flowmeters 13 - 15) and of the flows of O₂ for reaction and for the transport of the reagents (flowmeters 16-18). The reagents, e.g. SiCl₄ and GeCl₄, are in turn contained in containers 19, 20 (typically Drechsel bottles) from which they are made to evaporate and are introduced through respective transport lines 21, 22 into the flow.

The use of Ar and/or O₂ and the use of reagents which are in the vapour phase, and therefore very pure, ensures, since the operation is carried out in a controlled atmosphere, that hydroxyl groups are not formed in the deposited layers. It is therefore possible to eliminate the stage of dehydration of the deposited silica. Additionally, as has been stated, the use of an inductively coupled torch has the advantage of not requiring electrodes which may be corroded by the plasma and thus give rise to impurities within the deposited layers. Since the operation is carried out at atmospheric pressure, all the particles in the plasma are at essentially the same temperature (conditions of local thermal equilibrium) which, in the vicinity of the tail of the plasma (where the reagents are injected), is essentially equal to the melting point of the silica. It is thus made possible to deposit vitreous silica directly on to the substrate.

The formation of a vitreous layer with the use of the invention will now be described. In this formation, the following three stages can be conceptually distinguished:
1) synthesis of the silica;
2) deposition of a layer of silica powder, doped if required (this stage is practically coincident with the stage of synthesis);
3) consolidation and vitrification of the layer.

The process of synthesis of the silica takes place, as stated, in the tail of the plasma which acts as the heat source. When the reagents have been injected into this hot area, the well-known exothermic reactions of the oxidation of the tetrachlorides of silicon and germanium, shown below, take place:

SiCl₄ + O₂ --> SiO₂ + 2Cl₂ + 222 kJ/mol GeCl₄ + O₂ --> GeO₂ + 2Cl₂ + 19 kJ/mol

The solid particles of SiO₂ and GeO₂ (if present) which are formed, having a size of approximately 1-10 nm, are deposited on the plate 2 suspended above the outlet of the torch 1 in the form of a fine white powder. The position of the plate 2 with respect to the outlet of the torch 1 is such that a uniform deposition over the widest possible area is promoted, this also being assisted by the horizontal movement produced with the aid of the micrometric slide 5. The same arrangement is maintained for the stage of consolidation and vitrification of the powder, with the sole difference that the plate 2 can be lowered in such a way that higher temperatures are reached, promoting a faster and more efficient vitrification of the deposited powder.

The operating conditions for the torch 1 and for the flows of reagents are shown in the following tables.

**TABLE 1**

| OPERATING CONDITIONS OF THE TORCH | |
|---|---|
| m_{Ar} | 0 sccm |
| m_{O2} | 100 - 350 sccm |
| M_{Ar} | 1800 - 2100 sccm |
| P | 1700 - 2300 W |
| (m = plasma gas, M = confinement gas, P = power, sccm = standard cubic centimetres per minute). | |

The same operating conditions are maintained both during the deposition and during the vitrification.

**TABLE 2**

| RATES OF FLOW OF THE REAGENT GASES IN THE DEPOSITION PROCESS A) deposition of pure silica gas rate of flow (sccm) | |
|---|---|
| Principal O₂ | 100 |
| O₂ + SiCl₄ | 5 - 10 |

| B) deposition of silica doped with GeO₂ gas rate of flow (sccm) | |
|---|---|
| Principal O₂ | 100 |
| O₂ + SiCl₄ | 5 - 25 |
| O₂ + GeCl₄ | 5 - 15 |

Naturally, when the deposition of one layer has been completed, identical operations can be carried out for the formation of a subsequent layer.

Clearly, the above description is provided solely by way of example and without restrictive intent, and variations and modifications can be made without departure from the scope of protection of the invention. In particular, although reference has been made in the description to a deposition stage and a vitrification stage, it is possible, by appropriate selection of the reaction conditions, to carry out both stages in a single pass, thus further reducing the process times.

## Claims

1. Process for forming layers of vitreous silica, pure or doped, on a target (2) by using an inductively coupled plasma torch (1), the target being provided with a reciprocating movement in a direction perpendicular to the axis of the torch (1), characterized in that, in order to form layers on a planar target (2), reagents in the vapour state are injected in a free atmosphere into the tail of a plasma produced by gases at a pressure substantially equal to atmospheric pressure.

2. Process according to Claim 1, characterized in that the said reciprocating movement takes place at speeds selected from a range such that the target executes a full cycle in a period varying from approximately 1 minute to approximately 10 minutes.

3. Process according to Claim 1 or 2, characterized in that the target (2) executes a plurality of passes in front of the torch (1).

4. Process according to any one of the preceding claims, characterized in that the deposition of a layer of silica and its vitrification take place in a single pass.

5. Process according to any one of Claims 1 to 3, characterized in that the target moves in a plane lying at a first distance from the outlet of the torch for a deposition stage, and at a second distance, less than the first, for a vitrification stage.

6. Equipment for forming layers of vitreous silica, pure or doped, on a target, comprising an inductively coupled plasma torch (1), means (7, 8, 13-15) for supplying the torch (1) with the gases to be used for creating the plasma, sources (19, 20) of reagents for forming the materials to be deposited, and means (3, 5) for imparting to the target a reciprocating movement in a direction perpendicular to the axis of the torch (1), characterized in that, in order to deposit layers on a planar target (2), the said sources (19, 20) of reagents are connected to a nozzle (9) positioned in such a way that the said reagents are introduced into the tail of the plasma, in a free atmosphere, and supply this nozzle with reagents in the vapour state, and the means (7, 8, 13-15) for supplying the torch (1) with the gases to be used for creating the plasma are capable of supplying these gases at a pressure substantially equal to atmospheric pressure.

7. Equipment according to Claim 6, characterized in that the target (2) is carried by a support (3, 4) capable of keeping the target centred with respect to the axis of the torch during the said reciprocating movement.

8. Equipment according to Claim 6 or 7, characterized in that the said support (3, 4) is connected to means (6) for varying the distance of the target from the outlet of the torch (1) between a first distance, at which the target (2) is placed during a deposition stage, and a second distance, less than the first, at which the target (2) is placed during a vitrification stage.

9. Equipment according to any one of Claims 6 to 8, characterized in that the said support comprises a glass arm (4) connected to the means (5, 6) of horizontal and vertical movement.
